# EUROPÄISCHE PATENTSCHRIFT

(11) **EP 2 005 557 B1**
(45) Veröffentlichungstag und Bekanntmachung des Hinweises auf die Patenterteilung: **22.05.2013**
(21) Anmeldenummer: 07723798.0
(22) Anmeldetag: 30.03.2007
(51) Int. Cl.: H02K 7/06

(54) **SPINDELMOTOR**
SPINDLE MOTOR
MOTEUR DE BROCHE

(30) Priorität: 05.04.2006 DE 102006016390
(43) Veröffentlichungstag der Anmeldung: 24.12.2008
(73) Patentinhaber: SEW-EURODRIVE GmbH & Co. KG, 76646 Bruchsal (DE)
(72) Erfinder: DITTES, Gerhard, 75053 Gondelsheim (DE)
(86) Internationale Anmeldenummer: PCT/EP2007/002856
(87) Internationale Veröffentlichungsnummer: WO 2007/115701

(56) Entgegenhaltungen:
- DE-A1- 10 218 569
- DE-A1-102004 011 666
- US-A- 5 099 161

## Beschreibung

Die Erfindung betrifft einen Spindelmotor.

Aus der DE 102 35 078 A1 ist ein Spindelmotor mit integriertem Fettspeicher bekannt.

Aus der DE 83 28 518 U1 ist ein Linearantrieb mit Gewindespindel bekannt, bei dem zwischen Kugelumlaufmutter 2 und nicht drehendem Gehäuseteilen ein Flansch 4 vorgesehen ist.

Aus DE 102 18 569, DE 10 2004 011 666 und US 5, 099, 161 sind weitere Linearantriebe mit Gewindespindel bekant.

Der Erfindung liegt daher die Aufgabe zugrunde, einen Spindelmotor weiterzubilden, wobei mit geringer Teilezahl eine hohe Varianz von Spindelmotoren ausbildbar sein soll.

Erfindungsgemäß wird die Aufgabe bei dem Spindelmotor nach den in Anspruch 1 angegebenen Merkmalen gelöst.

Wichtige Merkmale der Erfindung bei dem Spindelmotor sind, dass der Spindelmotor einen Stator, einen Rotor, der als Hohlwelle ausgeführt ist und/oder einen Hohlwellenabschnitt aufweist, umfasst,
wobei ein Adapter mit dem Rotor lösbar verbunden ist, wobei eine Spindelmutter mit dem Adapter lösbar verbunden ist,
und wobei die Spindelmutter ein Innengewinde umfasst, die mit dem Außengewinde einer innerhalb der Spindelmutter vorgesehenen Spindel direkt oder indirekt derart zusammenwirkt, dass die Drehbewegung des Rotors in eine lineare Bewegung der Spindel umsetzbar ist,
wobei die Spindelmutter an ihrem äußeren Umfang eine Lauffläche für zumindest einen Wellendichtring umfasst.

Von Vorteil ist dabei, dass mittels des Adapters es ermöglicht ist, verschieden lange Rotoren zu verbinden mit immer derselben Spindelmutter. Es sind also mit geringer Teilezahl verschiedene Varianten einer Baureihe herstellbar, wobei die Varianten mit verschieden hohen Drehmomenten ausstattbar sind und somit abtriebsseitig verschieden stark axial wirkende Kräfte erzeugbar sind.

Außerdem können verschiedene Spindelmutterarten, also auch verschiedene Spindelarten, eingesetzt werden, da nur ein zugehöriger Adapter entsprechend ausgewählt werden muss. Der Rotor ist dabei unverändert einsetzbar.

Weiterer Vorteil ist, dass der Rotor einen geringen Innendurchmesser aufweisen darf und somit in eine entsprechend enge Aufmagnetisierungsvorrichtung einbringbar ist zum Aufmagnetisieren seines magnetischen Materials. Der Adapter weist daher eine Schnittstelle auf geringem Durchmesser zur Verbindung mit dem Rotor auf und auf größerem Durchmesser eine Schnittstelle zur Verbindung mit der Spindelmutter.

Vorteilig ist auch, dass ein Wellendichtring am Gehäuseteil anordenbar ist, der Abdichtfuntkion gegen die Spindelmutter ausübt. Dabei ist der Adapter axial zwischen Motor und Spindelmutter derart vorgesehen, dass eine Schnittstelle zum Motor hin und eine Schnittstelle zur Spindelmutter hin gebildet ist. Wenn nun verschieden lange Spindelmuttern am Adapter verbunden werden, ist die Lauffläche an der Spindelmutter vorsehbar und stets von außen zugänglich, so dass der Wellendichtring am radial weiter außen gelegenen Gehäuseteil anordenbar ist.

Bei einer vorteilhaften Ausgestaltung umfasst der Adapter eine Aufnahme für den Innenring eines ersten Lagers zur Lagerung des mit dem Adapter verbundenen Rotors und der mit dem Adapter verbundenen Spindelmutter. Von Vorteil ist dabei, dass der Adapter auf größerem Außeridurchmesser den Lagersitz vorsehbar macht. Auf kleineren Durchmessern sind die Verbindungsschrauben zur Verbindung mit der Spindelmutter und auf noch kleinerem Durchmesser die Verbindungsschrauben zur Verbindung mit dem Rotor vorsehbar. Der Spindelmotor ist somit kompakt, axial kurz und mit hohem maximal zulässigem Drehmoment ausführbar.

Bei einer vorteilhaften Ausgestaltung umfasst der Rotor eine Aufnahme für den Innenring eines weiteren Lagers zur Lagerung des mit dem Adapter verbundenen Rotors und der mit dem Adapter verbundenen Spindelmutter. Von Vorteil ist dabei, dass wenige Teile vorsehbar und große Lagerkräfte aufnehmbar sind.

Bei einer vorteilhaften Ausgestaltung ist die lösbare Verbindung mittels Verbindungsschrauben vorgesehen. Von Vorteil ist dabei, dass einfache und kostengünstige Mittel verwendbar sind.

Bei einer vorteilhaften Ausgestaltung umfasst die Spindelmutter an ihrem äußeren Umfang eine Lauffläche für zumindest einen Wellendichtring. Von Vorteil ist dabei, dass Schmierstoff am äußeren Umfang der Spindelmutter vorgesehen ist. Dieser ist beispielsweise von außen einbringbar oder einpressbar über einen Schmierstoffzuführungsanschluss.

Bei einer vorteilhaften Ausgestaltung weist die Spindelmutter zumindest eine radiale Bohrung auf zur Durchleitung von Schmierstoff in den Bereich der im Eingriff stehenden Verzahnungen der Spindelmutter und der Spindel. Von Vorteil ist dabei, dass die radiale Bohrung im genannten Bereich der Spindelmutter, insbesondere zwischen den beiden Laufflächen zweier benachbarter Wellendichtringe einbringbar ist. Somit ist der eingepresste Schmierstoff weiter in die Bohrung treibbar und auf diese Weise die Gewindespindel oder Kugelrollspindel schmierbar.

Außerdem ist ein Nachschmieren während des Betriebes ausführbar.

Bei einer vorteilhaften Ausgestaltung ist am Spindelmotor ein Faltenbalg zum Schutz der Spindel vor Verschmutzung vorgesehen. Von Vorteil ist dabei, dass die Standzeit erhöhbar ist.

Bei einer vorteilhaften Ausgestaltung ist ein Sperrluftanschluss zum Einleiten von Sperrluft in den vom Faltenbalg umgebenen Raumbereich vorgesehen. Von Vorteil ist dabei, dass der Schutz vor Verschmutzung weiter verbesserbar ist.

Bei einer vorteilhaften Ausgestaltung ist an der Spindel ein Federelement vorgesehen, das zur Aufnahme von kinetischer Energie vorgesehen ist bei Anfahren eines Anschlags des Spindelmotors. Von Vorteil ist dabei, dass für den Notfall ein Schutz vor Zerstörung des Motors vorsehbar ist.

Bei einer vorteilhaften Ausgestaltung umfasst das Federelement ein Tellerfederpaket, welches in axial Richtung beidseitig auf einen jeweiligen Anschlag fahrbar ist. Von Vorteil ist dabei, dass sogar beidseitiges Anfahren eines jeweiligen Anschlages, also axial vorne und axial hinten, geschützt ist.

Bei einer vorteilhaften Ausgestaltung umfasst der Spindelmotor an dem der Spindelmutter abgewandten Endbereich eine Bremse und/oder einen Winkelsensor. Von Vorteil ist dabei, dass eine Positionssteuerung mit hoher Genauigkeit ausführbar ist und mittels der Bremse starke Bremsbeschleunigungen ermöglicht werden.

Bei einer vorteilhaften Ausgestaltung umfasst der Rotor Permanentmagnete, insbesondere der Spindelmotor nach dem Synchronmotor-Prinzip angetrieben ist. Von Vorteil ist dabei, dass hohe Kräfte erzeugbar sind.

Weitere Vorteile ergeben sich aus den Unteransprüchen.

### Bezugszeichenliste

1 Rotor
2 Stator-Blechpaket
3 Gehäuseteil
4 Stator-Wicklungen
5 Lager
6 Tellerfederpaket
7 Anschlagskante, axial hinten
8 Adapter
9 Anschlagskante, axial vorne
10 Faltenbalg
11 Spindelmutter
12 Sperrluftanschluss
13 Schmieranschluss in radialer Bohrung
14 Wellendichtring
15 Lager
16 Verbindungsschraube
17 Gewindespindel
18 Schraube
19 Gleitbuchse
20 Signalstecker
21 Kardangelenkstück
22 Lagerschild
23 Verbindungsschraube
24 Gehäuseteil
25 Winkelsensor
26 Bolzen
27 Gabelstück für Kardangelenk
204 Gehäuseteil
208 Adapter
214 Wellendichtring
215 Wellendichtring

Die Erfindung wird nun anhand von Abbildungen näher erläutert:

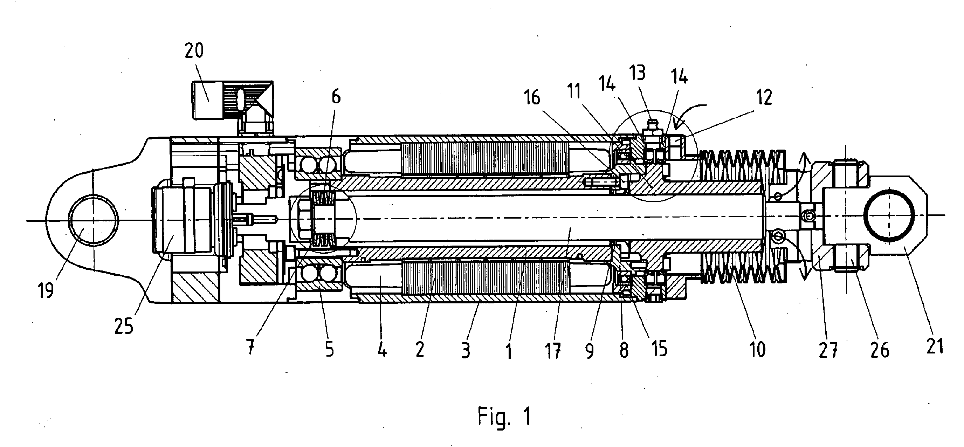

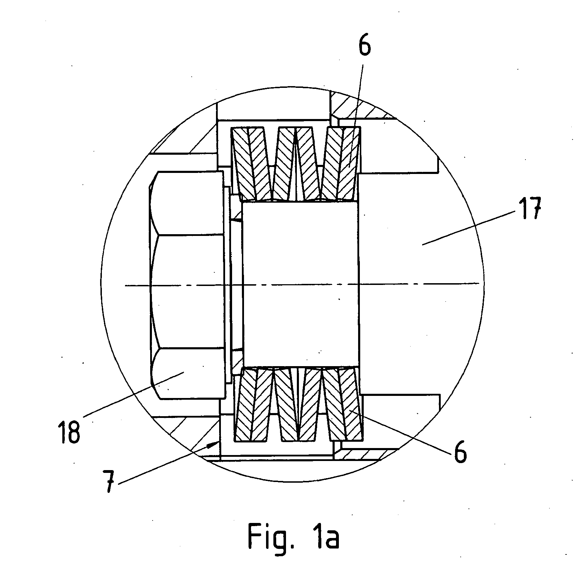

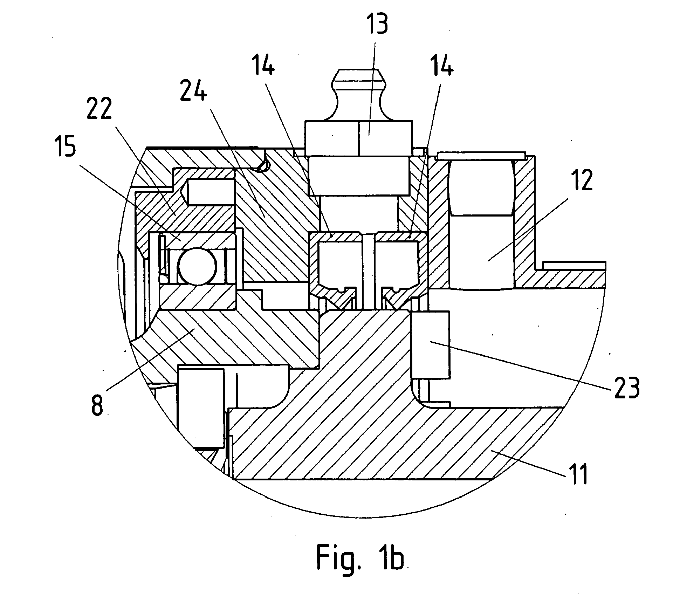

In der Figur 1 ist ein erfindungsgemäßer Spindelmotor in Schnittansicht gezeichnet. Dabei ist in Figur 1a ein erster und in Figur 1 b ein zweiter Ausschnitt vergrößert dargestellt.

Der Rotor 1 ist über das Lager 5 in einem Gehäuseteil und über das Lager 15 im Lagerschild 22 gelagert.

Das Stator-Blechpaket 2 ist vom Gehäuseteil 3 umgeben und nimmt die Stator-Wicklungen 4 auf.

Innerhalb des Rotors 1 ist eine Gewindespindel 17 vorgesehen, deren Außengewinde mit dem Innengewinde der Spindelmutter 11 in Eingriff steht. Die Spindelmutter 11 ist mittels der Verbindungsschrauben 23 mit dem Adapter 8 lösbar verbunden, der wiederum mittels der Verbindungsschrauben 16 mit dem Rotor 1 verbunden ist. Somit wird die Spindelmutter 17 zusammen mit dem Rotor 1 drehbar. Beim Drehen wird die Gewindespindel 17 axial verschoben.

Das an einem ersten axialen Ende der Gewindespindel 17 angeordnete und mit der Schraube 18 zusammengehaltene Tellerfederpaket 6 dient zur Aufnahme der kinetischen Energie, also kinetischer Energie der angetriebenen Last und der Rotationsenergie des Rotors, bei Anfahren der axial hinten gelegenen Anschlagskante 7.

Der Spindelmotor weist darüber hinaus noch eine axial vorne gelegene Anschlagskante 9 auf. Das Tellerfederpaket 6 ist derart ausgeführt, dass es beidseitig beim Anschlagen an die Anschlagskanten (7,9) jeweils die kinetische Energie aufzunehmen vermag.

Das Tellerfederpaket ist nur im Notfall eingesetzt. Bei Normalbetrieb wird es nicht belastet.

Die Spindelmutter 11 ist an ihrem dem Tellerfederpaket gegenüber liegenden axialen Ende mit dem Kardangelenkstück 21 verbunden. Das Gehäuse des Spindelmotors ist an dem anderen Ende mit der Gleitbuchse 19 verbunden. An das Kardangelenkstück 21 und die Gleitbuchse 19 ist die linear anzutreibende Vorrichtung verbindbar. Die erreichbaren axial wirkenden Kräfte sind hoch. Diese Vorrichtung kompensiert im Übrigen auch ein kleines Restdrehmoment, das durch die Reibungskräfte zwischen Spindelmutter und Gewindespindel erzeugt ist.

Zum Schutz gegen Schmutz und zur Sicherung von Bedienpersonal gegen schnell drehende Teile ist auch ein Faltenbalg 10 vorgesehen.

Ein Sperrluftanschluss 12 ist ebenfalls vorgesehen, um ein Eindringen von Schmutz ins Innere unter dem Faltenbalg zu verhindern.

Die Spindelmutter 11 ist mittels zweier Wellendichtringe abgedichtet, die an einem Gehäuseteil 24 angeordnet sind. Dieses Gehäuseteil 24 weist darüber hinaus einen Schmieranschluss 13 auf, der in einer radialen Bohrung angeordnet ist. Durch diesen Schmieranschluss 13 ist Schmierstoff einpressbar, der dann zur Schmierung der Wellendichtringe 14 verwendbar ist. Von dort gelangt dann der Schmierstoff durch eine radiale Bohrung in den Bereich der in Eingriff stehenden Verzahnungen der Spindelmutter und der Gewindespindel.

Am Spindelmotorgehäuse ist ein Signalstecker 20 vorgesehen, der die Signale des mit dem Rotor verbundenen Winkelsensors herausleitbar macht. Auf diese Weise ist ein Umrichter zur Versorgung der Statorwicklungen elektrisch verbindbar und eine präzise Lagesteuerung und -regelung ermöglicht.

Wesentlich bei der Erfindung ist, dass der Gesamt-Rotor des Spindelmotors insgesamt zweigeteilt ausgeführt ist. Denn der Rotor 1 ist über den Adapter 8 mit der Spindelmutter 11 verbunden. Auf diese Weise ist es ermöglicht, verschieden lange Rotoren zu fertigen, insbesondere auch zu magnetisieren, und über denselben Adapter mit derselben Spindelmutter zu verbinden. Alternativ sind auch verschiedene Spindelmuttern, beispielsweise von verschiedenen Herstellern oder Bauarten, verbindbar mit dem Rotor, indem ein entsprechender Adapter eingesetzt wird. Es ist also mittels des Adapters eine hohe Varianz erreichbar bei geringer Teilezahl.

Außerdem ist es durch den Adapter ermöglicht, dass der Rotor mit seinem Permanentmagnetematerial in einer Aufmagnetisiervorrichtung aufmagnetisiert wird, welche einen geringen Innendurchmesser aufweist.

Wichtig ist also bei der Erfindung, dass der Gesamt-Rotor mehrteilig ausgeführt ist und die Spindelmutter abgedichtet vorgesehen ist, insbesondere über die Wellendichtringe 14. Also ist ein abgedichteter hermetisch dichter, geschlossener Innenraum vorsehbar.

Außerdem ist ein Sperrluftanschluss vorgesehen, mit welchem Sperrluft, also Luft mit Überdruck, einblasbar ist zum Schutz des Innenraums des Spindelmotors.

Das Kardangelenk, umfassend Gabelstück 27 für Kardangelenk, Bolzen 26 und Kardangelenkstück 21, hat zum Vorteil, dass eine hohe Positioniergenauigkeit erreichbar ist, da eine verdrehsichere übertragjung der Winkelstellung zur anzutreibenden Vorrichtung hin ausführbar ist. Außerdem leitet es von dort eingebrachte Querkräfte ab. Diese werden beispielsweise durch Nicht-Parallelität der Achsen der Bolzen der anzutreibenden Vorrichtung verursacht, wobei diese in das Kardangelenkstück 21 und in die Gleitbuchse 19 abtriebsseitig verbunden werden. Des Weiteren ist mittels des Kardangelenks ein Ausgleich des Fluchtungsfehlers kompensierbar, insbesondere ein Fluchtungsfehler bei Achsversatz der abtriebsseitigen Teile 19 und 21. Somit sind auch etwas versetzte Einbaubereiche der anzutreibenden Vorrichtung kompensierbar.

Das Gabelstück 27 und die Gewindespindel sind kraftschlüssig verbunden. Vorteilhaft ist eine Klemmverbindung eingesetzt, die zu einer spielfreien Verbindung führt. Ein zusätzlicher Formschluss ist vorzugsweise darüber hinaus vorgesehen, damit nach eventuellem Versagen der Kraftschlussverbindung der Formschluss zur Erhöhung der Sicherheit zum Einsatz kommt.

Im Inneren des Spindelmotors, insbesondere im Inneren des Rotors 1 ist auch Schmierstoff vorsehbar. Somit ist dieses Innere auch als Fettspeicher verwendbar. Ein Nachfüllen kann weiterhin durch den Schmieranschluss, insbesondere Schmiernippel, 13 erfolgen, wobei der Schmierstoff dann über den Gewindebereich in diesen Fettspeicher gelangt. Als Schmierstoff ist Fett oder Öl verwendbar.

Bei weiteren erfindungsgemäßen Ausführungsbeispielen ist auch auf der Spindelmutter 11 eine Lauffläche für einen Wellendichtring 14 vorgesehen. Somit ist ein erster Wellendichtring 14 zwischen Adapter 8 und Gehäuse und ein zweiter zwischen Spindelmutter 11 und Gehäuse vorsehbar und der Motor noch kompakter aufbaubar.

Bei weiteren erfindungsgemäßen Ausführungsbeispielen ist als Gewindespindel auch eine Kugelumlaufspindel oder eine Planetenrollspindel verwendbar.

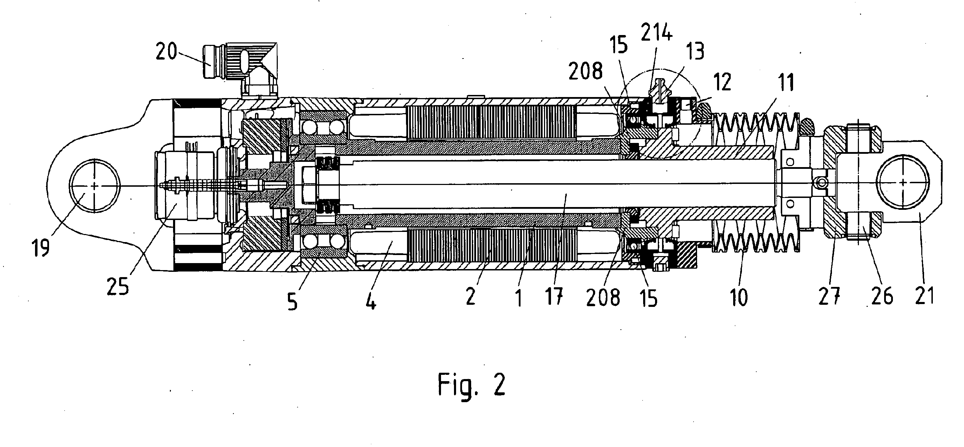

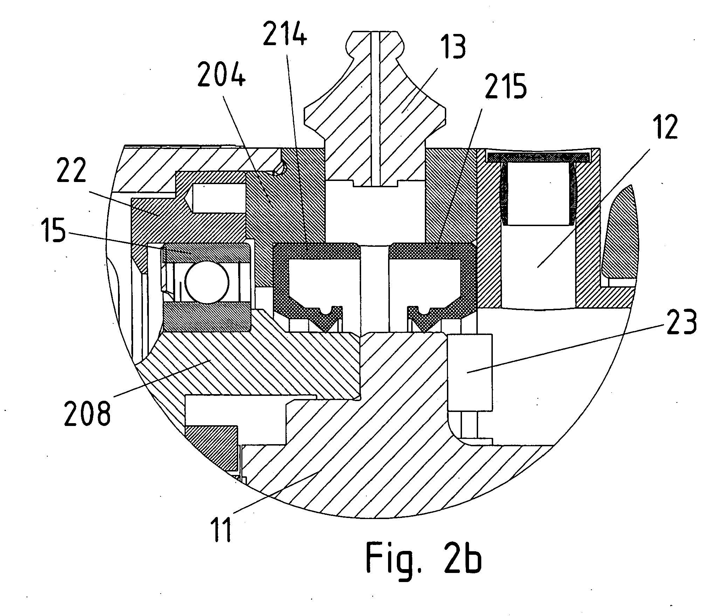

In Figur 2 ist ein weiteres erfindungsgemäßes Ausführungsbeispiel gezeigt, bei dem statt der Wellendichtringe 14 nun der Wellendichtring 214 mit seiner Dichtlippe auf der Lauffläche des Adapters 208 läuft. Der Wellendichtring 215 ist wie zuvor der Wellendichtring 14 auf der Spindelmutter 11 vorgesehen. Der Vorteil bei dieser Anordnung liegt darin, dass bei der Montage zunächst der Adapter 208 montiert wird und dann das Gehäuseteil 204 mit dem Wellendichtring 214. Auch bei leichten Verkantungen wird der Wellendichtring 214 korrekt und sicher montierbar. Mit dem Wellendichtring 214 wird auch der Wellendichtring 215 montiert. Danach wird die Spindelmutter 11 eingeschoben.

Beim Einschieben der Spindelmutter 11 wird der Wellendichtring 215 auch bei leichtem Verkanten ebenfalls sicher und korrekt belastet, so dass kein Verquetschen oder Umstülpen auftreten kann.

Über die bezüglich der Wellendichtringe 214 und 215 sichere Montage hinaus wird durch das Anordnen des Wellendichtrings 214 auf dem Adapter 208 in axialer Richtung mehr Platz geschaffen für eine Radialbohrung in der Spindelmutter zur Durchleitung von Schmierstoff. Somit ist statt des Wellendichtrings 215 auch ein anderer Wellendichtring einsetzbar, welcher mehr axialen Bauraum benötigt und es ist trotzdem genügend Platz für die Radialbohrung zur Schmierung des Gewindes.

## Patentansprüche

1. Spindelmotor,
umfassend einen Stator (2) einen Rotor (1), der als Hohlwelle ausgeführt ist und/oder einen Hohlwellenabschnitt aufweist,
wobei ein Adapter (8, 208) dem Rotor (1) lösbar verbunden ist, wobei eine Spindelmutter (11) mit dem Adapter (8, 208) lösbar verbunden ist,
und wobei die Spindelmutter (11) ein Innengewinde umfasst, die mit dem Außengewinde einer innerhalb der Spindelmutter (11) vorgesehenen Spindel (17) direkt oder indirekt derart zusammenwirkt, dass die Drehbewegung des Rotors (1) in eine lineare Bewegung der Spindel (17) umsetzbar ist
woebi die Spindelmutter (11) an ihrem äußeren Umfang eine Lauffläche für zumindest einen Wellendichtring (14, 214) umfasst.

2. Spindelmotor nach mindesten einem der vorangegangenen Ansprüche,
**dadurch gekennzeichnet, dass**
der Adapter (8) eine Aufnahme für den Innenring eines ersten Lagers (15) umfasst zur Lagerung des mit dem Adapter (8) verbundenen Rotors (1) und der mit dem Adapter (8) verbundenen Spindelmutter (11)

3. Spindelmotor nach mindesten einem der vorangegangenen Ansprüche,
**dadurch gekennzeichnet, dass**
der Rotor (1) eine Aufnahme für den Innenring eines weiteren Lagers (5) umfasst zur Lagerung des mit dem Adapter (8) verbundenen Rotors (1) und der mit dem Adapter (8) verbundenen Spindelmutter (11).

4. Spindelmotor nach mindesten einem der vorangegangenen Ansprüche,
**dadurch gekennzeichnet, dass**
die lösbare Verbindung, insbeosndere Adapter (8) mit Rotor (1), mittels Verbindungsschrauben (16, 23) vorgesehen ist.

5. Spindelmotor nach mindesten einem der vorangegangenen Ansprüche,
**dadurch gekennzeichnet, dass**
der Adapter (208) an seinem äußeren Umfang eine Lauffläche für zumindest einen Wellendichtring (214) umfasst.

6. Spindelmotor nach mindesten einem der vorangegangenen Ansprüche,
**dadurch gekennzeichnet, dass**
einer der Wellendichtringe (14, 214) mit einem Gehäuseteil (24) verbunden ist oder in ihm angeordnet ist, insbeosndere seine Dichtlippe gegen die Lauffläche am Adpater (8, 208) oder an der Spindelmutter (11) Dichtfunktion ausübend vorgesehen ist.

7. Spindelmotor nach mindesten einem der vorangegangenen Ansprüche,
**dadurch gekennzeichnet, dass**
die Spindelmutter (11) zumindest eine radiale Bohrung aufweist zur Durchleitung von Schmierstoff in den Bereich der im Eingriff stehenden Verzahnungen der Spindelmutter (11) und der Spindel (17).

8. Spindelmotor nach mindesten einem der vorangegangenen Ansprüche,
**dadurch gekennzeichnet, dass**
zwischen den Wellendichtringen (14, 214) ein Raumvolumen zum Einleiten von Schmierstoff mit Überdruck vorgesehen ist, der in die radiale Bohrung eingeleitet und dort durchgeleitet wird in den Bereich der im Eingriff stehenden Verzahnungen der Spindelmutter (11) und der Spindel (17).

9. Spindelmotor nach mindesten einem der vorangegangenen Ansprüche,
**dadurch gekennzeichnet, dass**
die radiale Bohrung axial motorseitig vor der Lauffläche des auf der Spindelmutter (11) angeordneten Wellendichtrings (14, 214) vorgesehen ist, insbesondere zwischen den Laufflächen der Wellendichtringe (14, 214).

10. Spindelmotor nach mindesten einem der vorangegangenen Ansprüche,
**dadurch gekennzeichnet, dass**
am Spindelmotor ein Faltenbalg (10) zum Schutz der Spindel (17) vor Verschmutzung vorgesehen ist, insbeosndere wobei der Faltenbalg (10) gehäusebildend ist für Varainten mit Spindelmuttern (11) verschieder axialer Länge.

11. Spindelmotor nach mindesten einem der vorangegangenen Ansprüche,
**dadurch gekennzeichnet, dass**
ein Sperrluftanschluss (12) zum Einleiten von Sperrluft in den vom Faltenbalg (10) umgebenen Raumbereich vorgesehen ist.

12. Spindelmotor nach mindesten einem der vorangegangenen Ansprüche,
dadurch gekennzeichet, dass
an der Spindel (17) ein Federelement (6) vorgesehen ist, das zur Aufnahme von kinetischer Energie vorgesehen ist bei Anfahren eines Anschlags des Spindelmotors.

13. Spindelmotor nach mindesten einem der vorangegangenen Ansprüche,
**dadurch gekennzeichnet, dass**
das Federelement ein Tellertederpaket (6) umfasst, welches in axial Richtung beidseitig auf einen jeweiligen Anschlag fahrbar ist.

14. Spindelmotor nach mindesten einem der vorangegangenen Ansprüche,
**dadurch gekennzeichnet, dass**
der Spindelmotor an dem der Spindelmutter (11) abgewandten Endbereich eine Bremse und/oder einen Winkelsensor (25) umfasst.

15. Spindelmotor nach mindesten einem der vorangegangenen Ansprüche,
**dadurch gekennzeichnet, dass**
der Rotor Permanentmagnete umfasst, insbesondere der Spindelmotor nach dem Synchronmotor-Prinzip angetrieben ist.

## Claims

1. A spindle motor,
comprising a stator (2), a rotor (1), which is embodied as a hollow shaft and/or has a hollow-shaft section,
an adapter (8, 208) being connected detachably to the rotor (1), a spindle nut (11) being connected detachably to the adapter (8, 208),
and the spindle nut (11) comprising an internal thread which cooperates directly or indirectly with the external thread of a spindle (17), provided within the spindle nut (11), in such a manner that the rotary movement of the rotor (1) can be converted into a linear movement of the spindle (17),
the spindle nut (11) comprising on its outer periphery a running surface for at least one shaft sealing ring (14, 214).

2. A spindle motor according to at least one of the preceding claims, **characterised in that** the adapter (8) comprises a receptacle for the inner raceway of a first bearing (5) for mounting the rotor (1) which is connected to the adapter (8) and the spindle nut (11) which is connected to the adapter (8).

3. A spindle motor according to at least one of the preceding claims, **characterised in that** the rotor (1) comprises a receptacle for the inner raceway of a further bearing (5) for mounting the rotor (1) which is connected to the adapter (8) and the spindle nut (11) which is connected to the adapter (8).

4. A spindle motor according to at least one of the preceding claims, **characterised in that** the detachable connection, in particular adapter (8) with rotor (1), is provided by means of connecting screws (16, 23).

5. A spindle motor according to at least one of the preceding claims, **characterised in that** the adapter (208) comprises on its outer periphery a running surface for at least one shaft sealing ring (214).

6. A spindle motor according to at least one of the preceding claims, **characterised in that** one of the shaft sealing rings (14, 214) is connected to a housing part (24) or is arranged therein, in particular its sealing lip is provided to perform a sealing function against the running surface on the adapter (8, 208) or on the spindle nut (11).

7. A spindle motor according to at least one of the preceding claims, **characterised in that** the spindle nut (11) has at least one radial bore for passing lubricant through into the region of the engaged toothing of the spindle nut (11) and the spindle (17).

8. A spindle motor according to at least one of the preceding claims, **characterised in that** a spatial volume for the introduction of lubricant with excess pressure is provided between the shaft sealing rings (14, 214), which is introduced into the radial bore and is passed through there into the region of the engaged toothing of the spindle nut (11) and the spindle (17).

9. A spindle motor according to at least one of the preceding claims, **characterised in that** the radial bore is provided axially on the motor side before the running surface of the shaft sealing ring (14, 214) which is arranged on the spindle nut (11), in particular between the running surfaces of the shaft sealing rings (14, 214).

10. A spindle motor according to at least one of the preceding claims, **characterised in that** a bellows (10) for protecting the spindle (17) from soiling is provided on the spindle motor, in particular the bellows (10) being housing-forming for variants with spindle nuts (11) of different axial length.

11. A spindle motor according to at least one of the preceding claims, **characterised in that** a sealing-air connection (12) for the introduction of sealing air into the spatial region which is surrounded by the bellows (10) is provided.

12. A spindle motor according to at least one of the preceding claims, **characterised in that** a spring element (6) is provided on the spindle (17), which element is provided for absorbing kinetic energy upon running into a stop of the spindle motor.

13. A spindle motor according to at least one of the preceding claims, **characterised in that** the spring element comprises a disc-spring stack (6) which is movable onto a respective stop in the axial direction on both sides.

14. A spindle motor according to at least one of the preceding claims, **characterised in that** the spindle motor comprises a brake and/or an angle sensor (25) on the end region remote from the spindle nut (11).

15. A spindle motor according to at least one of the preceding claims, **characterised in that** the rotor comprises permanent magnets, in particular the spindle motor is driven according to the synchronous-motor principle.

## Revendications

1. Moteur de broche,
comprenant un stator (2), et un rotor (1) qui est réalisé sous la forme d'un arbre creux et/ou qui présente un tronçon d'arbre creux,
sachant qu'un adaptateur (8, 208) est relié de manière amovible au rotor (1), sachant qu'un écrou de broche (11) est relié de manière amovible à l'adaptateur (8, 208),
et sachant que l'écrou de broche (11) comprend un filetage intérieur qui coopère directement ou indirectement avec le filetage extérieur d'une broche (17), prévue à l'intérieur de l'écrou de broche (11), de telle sorte que le mouvement de rotation du rotor (1) peut être transformé en un mouvement linéaire de la broche (17),
sachant que l'écrou de broche (11) comprend sur son pourtour extérieur une surface de portée pour au moins une bague d'étanchéité d'arbre (14, 214).

2. Moteur de broche selon la revendication précédente, **caractérisé en ce que** l'adaptateur (8) comprend un logement pour la bague intérieure d'un premier palier (15) destiné au montage du rotor (1) relié à l'adaptateur (8) et de l'écrou de broche (11) relié à l'adaptateur (8).

3. Moteur de broche selon au moins une des revendications précédentes, **caractérisé en ce que** le rotor (1) comprend un logement pour la bague intérieure d'un autre palier (5) destiné au montage du rotor (1) relié à l'adaptateur (8) et de l'écrou de broche (11) relié à l'adaptateur (8).

4. Moteur de broche selon au moins une des revendications précédentes, **caractérisé en ce que** la liaison amovible, notamment de l'adaptateur (8) avec le rotor (1), est prévue au moyen de vis d'assemblage (16, 23).

5. Moteur de broche selon au moins une des revendications précédentes, **caractérisé en ce que** l'adaptateur (208) comprend sur son pourtour extérieur une surface de portée pour au moins une bague d'étanchéité d'arbre (214).

6. Moteur de broche selon au moins une des revendications précédentes, **caractérisé en ce qu'**une des bagues d'étanchéité d'arbre (14, 214) est reliée à une partie de boîtier (24) ou est disposée dans celle-ci, en particulier sa lèvre d'étanchéité est prévue pour exercer une fonction d'étanchéité contre la surface de portée prévue sur l'adaptateur (8, 208) ou sur l'écrou de broche (11).

7. Moteur de broche selon au moins une des revendications précédentes, **caractérisé en ce que** l'écrou de broche (11) présente au moins un perçage radial pour le passage de lubrifiant dans la région des dentures en prise de l'écrou de broche (11) et de la broche (17).

8. Moteur de broche selon au moins une des revendications précédentes, **caractérisé en ce qu'**un volume spatial est prévu entre les bagues d'étanchéité d'arbre (14, 214) pour l'introduction de lubrifiant en surpression qui est introduit dans le perçage radial et est dirigé de là dans la région des dentures en prise de l'écrou de broche (11) et de la broche (17).

9. Moteur de broche selon au moins une des revendications précédentes, **caractérisé en ce que** le perçage radial est prévu axialement du côté du moteur avant la surface de portée de la bague d'étanchéité d'arbre (14, 214) disposée sur l'écrou de broche (11), en particulier entre les surfaces de portée des bagues d'étanchéité d'arbre (14,214).

10. Moteur de broche selon au moins une des revendications précédentes, **caractérisé en ce qu'**un soufflet (10) est prévu sur le moteur de broche pour protéger la proche (17) de l'encrassement, sachant en particulier que le soufflet (10) forme un boîtier pour des variantes avec des écrous de broche (11) de différentes longueurs axiales.

11. Moteur de broche selon au moins une des revendications précédentes, **caractérisé en ce qu'**il est prévu un branchement d'air de barrage (12) pour introduire de l'air de barrage dans la région spatiale entourée par le soufflet (10).

12. Moteur de broche selon au moins une des revendications précédentes, **caractérisé en ce qu'**un élément de ressort (6) est prévu sur la broche (17), élément qui est prévu pour absorber de l'énergie cinétique lors de l'atteinte d'une butée du moteur de broche.

13. Moteur de broche selon au moins une des revendications précédentes, **caractérisé en ce que** l'élément de ressort comprend un groupe de rondelles-ressorts (6) qui peut être déplacé en direction axiale de part et d'autre sur une butée respective.

14. Moteur de broche selon au moins une des revendications précédentes, **caractérisé en ce que** le moteur de broche comprend, sur la région terminale opposée à l'écrou de broche (11), un frein et/ou un capteur angulaire (25).

15. Moteur de broche selon au moins une des revendications précédentes, **caractérisé en ce que** le rotor comprend des aimants permanents, en particulier le moteur de broche est entraîné selon le principe du moteur synchrone.
